# EUROPEAN PATENT APPLICATION

(11) **EP 2 506 519 A1**
(43) Date of publication of application: **03.10.2012**
(21) Application number: 11002486.6
(22) Date of filing: 25.03.2011
(51) Int. Cl.: H04L 29/06, G06F 21/00

(54) **Method for determining integrity in an evolutionary collabroative information system**

(71) Applicant: EADS Deutschland GmbH, 85521 Ottobrunn (DE)
(72) Inventor: Hoche, Michael, Dr., 88090 Immenstaad (DE); Kirsch, Heiko, 14772 Brandenburg/Havel (DE); Kirner, Paul, 88045 Friedrichshafen (DE)
(74) Representative: Meel, Thomas

(57) **Abstract**

The invention relates to a method for determining integrity in an evolutionary collaborative information system (like a mobile telecommunication network or the Internet), by
• defining recursively the interaction of each component ensembles,
• defining constraints as interactional properties explicitly that are either measured, derived from measurements, or evaluated from other constraints or credentials in the context of an component ensemble,
• defining credentials as properties of components that are either measured, derived from measurements, or evaluated from other credentials in the context of an component ensemble,
• identifying for a service invocation the applied ensemble decompositions that realize the service,
• evaluating recursively the values of constraints and the values of credentials in the ensemble decompositions,
• determining the integrity of the ensembles as a function of the values of the credentials and constraints.

## Description

The invention relates to a method for identifying and determining the value of integrity and integrity violations in an evolutionary collaborative information system.

### Prior Art

Recent cyber security incidents and the mobile telecommunication threats, e.g. "Stuxnet" or the iPhone worm "ikee" demonstrate the need for collaborative protection and early warning concepts tailored for telecommunication and information systems (e.g. a mobile telecommunication network or the Internet). Additionally, threats to mobile networks will increase with the growing use of un-trusted and malicious applications on modern mobile devices. Simultaneously, the utilization of mobile networks becomes more multifaceted (e.g. public/private use), and the technical heterogeneity (2G, 3G, 4G, non-3G-wireless and future generations) and complexity (roaming, interworking) of the overall information system grows due to its interconnectedness. This trend will likely continue well into the future, due to the growing number of heterogeneous (e.g. wireless) interfaces on end devices and the increasing use of applications whose integrity cannot be guaranteed a priori.

The basic problem is the development of a holistic security concept for such information system infrastructures that satisfies the diverse requirements of modern networks. Integrity protection and attack detection solutions are a basis for this goal. The additional integration of collaborative information exchange mechanisms between interacting parties will improve the overall security level and thus the payoff.

Current state of the art could only be considered as a patchwork of integrity assuring means ranging from binary comparison to sophisticated pattern matcher to identify malicious fragments.

Information security, integrity in particular, is defined as a concept in various security standards and is claimed by several legal regulations. Most relevant definitions are contributed by the International Organization for Standardization (ISO), the National Institute of Standards and Technology (NIST) and the Bundesamt für Sicherheit in der Informationstechnologie (BSI).

According to the BSI glossary integrity is defined as "correctness and completeness of data and the correct functionality of the system". Similar definitions are provided by the NIST and the ISO Standards. As presented in the following overview there are various notions of the term integrity:

| Name | Definition | Source |
|---|---|---|
| Data Integrity | The property that data has not been altered in an unauthorized manner. Data integrity covers data in storage, during processing, and while in transit. | NIST SP 800-27 |
| Data Integrity | The property that data has not been changed, destroyed, or lost in an unauthorized or accidental manner. | CNSSI-4009 |
| Data integrity | Property that data has not been altered or | ISO 7498-2; |
| | destroyed in an unauthorized manner. | ISO/IEC 13888-1:2009; |
| | | ISO/IEC FDIS 13888-2: 2010; ISO/IEC 9797-1; |
| | | ISO/IEC 19772: 2009; |
| | | ISO/IEC 7498-2:1989; |
| | | ISO/IEC 18014-2: 2009 |
| | | ISO/IEC 9797-1:1999;ISO/IEC FDIS 11770-1: 2010; N8861: |
| | | PreFDIS 9797-1: 2010 |
| Integrity | Property of protecting the accuracy and completeness of assets. | N8718: 1 st WD 27000: 2010 |
| Integrity | Property of safeguarding the accuracy and completeness of information and processing methods. | ISO/IEC 21827: 2008 |
| Integrity | Property that sensitive data has not been modified or deleted in an un-authorized and undetected manner. | N8776: 2nd WD 19790: 2010 |
| Integrity | Quality of a system or component that reflects its logical correctness and reliability, completeness, and consistency. In security terms, integrity generates the requirement for the system or component to be protected against either intentional or accidental attempts to (1) alter, modify, or destroy it in an improper or unauthorized manner, or (2) prevent it from performing its intended function(s) in an unimpaired manner, free from improper or unauthorized manipulation. | N8732: 3rd WD 29193: 2010 |
| Integrity | Guarding against improper information modification or destruction, and includes ensuring information non-repudiation and authenticity. | NIST SP 800-53; NIST SP 800-53A; NIST SP 800-18; NIST SP 800-27; NIST SP 800-37; NIST SP 800-60; FIPS 200; FIPS 199; 44 U.S.C., Sec. 3542 |
| Integrity | The property that sensitive data has not been modified or deleted in an unauthorized and undetected manner. | FIPS 140-2 |
| Integrity | The property whereby an entity has not been modified in an unauthorized manner. | CNSSI-4009 |
| System Integrity | The quality that a system has when it performs its intended function in an unimpaired manner, free from unauthorized manipulation of the system, whether intentional or accidental. | NIST SP 800-27 |
| System Integrity | Attribute of an information system when it performs its intended function in an unimpaired manner, free from deliberate or inadvertent unauthorized manipulation of the system. | CNSSI-4009 |

As conclusion of all aforementioned definitions and notions of the term integrity in general can be defined as:
**Definition:** Integrity is a security characteristic of an evolutionary collaborative information system and a non-functional requirement of it. Integrity ensures that services and information provided by this information system are resistant and resilient against unauthorized modifications.

Integrity is usually ensured by deploying safeguards (synonymous with security controls and countermeasures) (NIST SP 800-53) within the information system.

Concluding on evaluations of these safeguards and their technical implementations, we can summarize:
- There are plenty of uncoordinated initiatives, approaches and implementations to increase integrity.
- Although integrity is a non-functional property covering an information system as a whole, it is made concrete on a plethora of concrete instances (realizations) adding the dimension of evolution complexity, e.g. when the information system or its constituents, the components, are evolving in independent and asynchronous life cycles.
- As the information system is under continuous evolution, the means are that intend to protect integrity are evolving independently, too.
- The evolution is mainly influenced by economical motivations like research programs or product releases.
- The set of identified requirements is not uniform and lacks of stakeholders and lacks especially of economical rationales.

WO 2011032094 A1 discloses an "unstructured event parser" that analyzes an event that is in unstructured form and generates an event that is in structured form. In this document an event corresponds to the detection of an integrity violation, i.e. a failed credential or a failed constraint. WO 2011032094 A1 specifically discloses a mapping phase that determines, for a given event token, possible fields of the structured event schema to which the token could be mapped and the probabilities that the token should be mapped to those fields. The structured event schema is like an artificial set of bins. The remaining problem is to relate the identified event to a dedicated violation inside a service invocation. According to WO2011032094, the cohesion between a service invocation, i.e. an run of an ensemble, could not be restored out of the extracted bins. As a result, this approach does not allow to identify the set of service invocations with integrity violation which in turn is necessary to calculate the security risk, i.e. the damage imposed by a detected violation.

### Object of the invention

The manifold of approaches and the diversity of the component market require a coordinating unified view that enables the assessment whether a service or information is integer. This coordinating unified view is the foundation to determine integrity - e.g. to conclude whether concrete service invocations can be considered as integer.

It is therefore the object of the invention to create and implement such coordinating unified view in order to identify and determine the value of integrity in an evolutionary collaborative information system.

This object is achieved by the method of claim 1. An advantageous embodiment of the invention is the subject matter of a further claim.

### Brief Description of Drawings

Fig. 1: shows an example of a meta-model of an ensemble;
Fig. 2: shows an example of an eNB blackboard.

### approach and technical Implementation

In order to fulfill the main requirement of maximize the utilities for all participating agents within the collaborative information system inside an economic security model the integrity facet has to be treated formally by a predicate assessing the level and the value of integrity.

That means there are sensors/detectors necessary that can measure, derive form measurements or evaluate from the context whether a constellation of components is considered as integer. For instance a constellation could be considered as not- integer because there is a component detected that matches e.g. a malware pattern. Another example could be the default software constellation of a smartphone that is considered to be integer. Note that the smartphone is here considered as a service in order to enable formal service composition.

So there are two answers for a constellation either it is integer or it is not integer. In the second case an economic (online) analysis could recommend to enhance integrity of the constellation or to use another (functionally) alternative but integer constellation. To investigate integrity violations and to derive means that create or enhance integrity is out of scope although recommendation on a context sensitive case are considered as valuable use case.

From the definition services have to be resistant and resilient against unauthorized modification. Services are simply provided by compositions of components and the integrity of the components and their interaction assures the service integrity.

To define a model space and unify the separate approaches that can cope with the heterogeneity and evolution complexity we introduce service ensembles. Ensembles are the unifying architectural abstraction for component-based integrity, and hence service integrity.

Each interaction within an ensemble depends on one or more involved component's properties. Discovering these properties and their interactions, and ensuring that all involved components exhibit these properties is the means to measure service integrity.

The intuition behind these concepts is simple. Since there are bound to be many unknowns, we need a denotation that exposes areas of uncertainty. As a notion of catalog we introduce ensembles, blackboards, credentials and constraints. A blackboard is an instantiation of the introduced ensemble meta-model. In blackboards, components and their interactions are annotated with credentials and constraints.

Constraints identify what is required of components for an interaction to work integer, and accordingly are defined in terms of relations among component credentials. Constraints and credentials are predicates on interactions and components, respectively, where their truth has been validated or remains to be validated by respective detectors or sensors. A detector is also a component and hence connotates to the idea of ensembles.

Blackboards are instrumental for integrity exploration. As a by-product, critical component properties and unexpected interactions might be discovered. This leads to an ultimately deeper understanding of what is needed to make ensembles integer and work properly. Blackboard allow to express the knowledge discloses in the previous chapters in a structural and coordinated way.

### Definition: Component

A component is a unit of software implementation that
- Is produced by a vendor who sells the component or licenses its use
- Is released by its vendor
- Provides an interface supporting interaction with other components, thus forming a service.

In the view of the heterogeneity imposed we need an additional classification scheme to partition the universal set of components into meaningful subsets, where these subsets contain components that share properties. Such subsets can be arranged in an arbitrarily complex taxonomy although two classifiers seem to be useful because of the market driven component evolutions: technology and product.

### Definition: Technology

A technology contains the set of all components that have comparable functionality.

For example, evolved Node Bs (eNBs) within the mobile communication network are representing a technology. The comparable functionality would be providing access for User Equipment (UE) to the network via a radio interface. According to the 3GPP Technical Specification TS-23.002 an eNB is a logical network component which serves one or more E-UTRAN cells. The E-UTRAN consists of eNBs, providing the E-UTRA user plane and control plane terminations towards the UE. The eNBs can be interconnected with each other by means of the X2 interface. The eNBs are connected by means of the S1 interface to the Evolved Packet Core (EPC), more specifically to the Mobility Management Entity (MME) by means of the S1-MME and to the Serving Gateway (S-GW) by means of the S1-U interface. The S1 interface supports a many-to-many relation between MMEs / S-GWs and eNBs. The split of functions between eNB and EPC is described in the specifications 3GPP TS 23.401 , TS 36.300 and TS 36.401.

### Definition: Product

A product contains the set of all components provided by a particular vendor that satisfy the technology criteria.

For example, an eNB provided by a special vendor represents a product. This product is composed of several hardware- and software-components, i.e. antennas, digital signaling processors, operating system with application(s) etc.

The definition of component as an implementation with an interface is subtler than it appears. Interface is really beyond an application programming interface it is a notion of interaction, i.e. how components interfere.

For example, an eNB provides basic interactions between UE, MME and S-GW to enable consumption of other (value added) services by the UE.

### Definition: Credential

A credential is a triple <property, value, howToVerify >, where
- property is the name of the component property,
- value is the value of this property for a particular component, and
- howToVerify is the means that have been employed to obtain this value.

What we need to know is expressed in terms of attributes and their values. Does a component possess a particular attribute? If so, what is the value of that attribute? This is similar to the idea of a credential, except it describes something we need to know rather than something already known.

Credentials allow to tag knowledge and to describe how this knowledge is obtained. Properties can range from version statements, which might be verified by comparing the component with an original or by verifying a certificate etc.

### Definition: Conjecture

A conjecture is a triple <property, value, how To Verify>, where
- property is the name of the component property that the component is thought to possess,
- value is a possibly undefined value of this property for a particular component, and
- howToVerify is the means that will be used to obtain this value.

Conjectures correspond to unknown proofs of properties. Conjectures are the means to identify incomplete knowledge and forms requirements for detectors.

An ensemble includes things with properties described as credentials. There are three kinds of things with properties: components, products, and technologies. Products and technologies are set abstractions that contain components. Credentials associated with technologies and products ultimately apply to the components they classify.

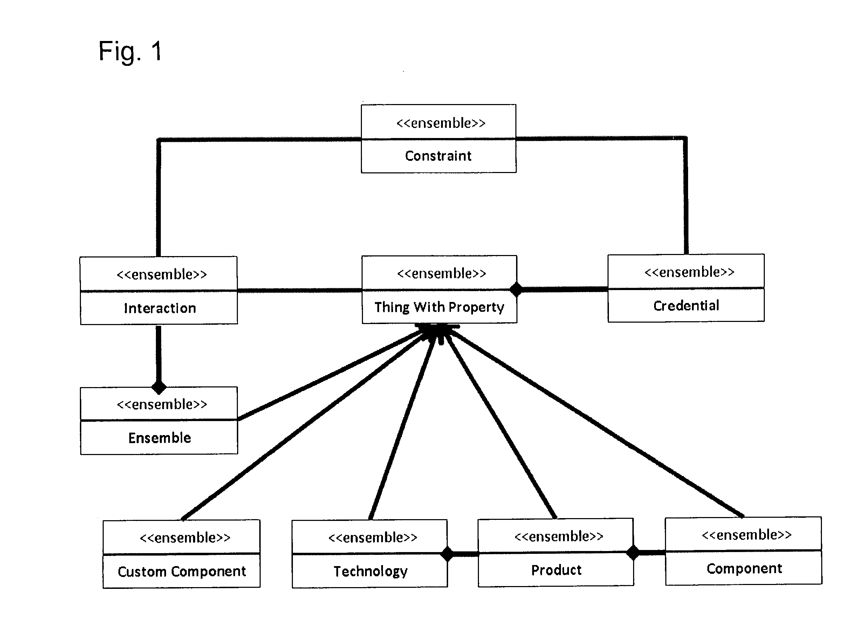

To concretize the idea of an ensemble we use UML notations and declare an ensemble as a meta-model. Fig. 1 shows one example of such meta-model of an ensemble.

The stereotype «ensemble» is used to reinforce that it is a meta-model that is being described rather than a model of any particular system. Technology and product classifiers define a hierarchy of sets, which is perfectly consistent with sub-classing.

Types of exceptions arise frequently in the component marketplace. This marketplace is too chaotic to conform to the mathematical rigor of sub-classing or subtyping. The boundaries between products and technologies, and between technologies themselves, seem to be constantly shifting. Hence we introduce a flexible and sufficiently expressive aggregation.

Components have many properties, and hence many possible credentials. Relevant properties concern how they fill a particular role in a system, that is, how they interact with other components. Component interaction ensures that systems achieve desired security characteristic integrity. Credentials are inherently interactional. Although they are interactional, they depend on component properties. Ultimately, all interactions depend on the components that participate in the interaction.

Custom component is a component that is injected in the blackboard. Custom components might be malware or simply private custom extensions not broadly deployed.

Finally we are only interested whether a service is integer. Therefore we introduce the notion constraint.

### Definition: Constraint

A constraint denotes a property of a component interaction, and identifies the component properties that this interactional property depends on.

We represent interactional properties and their dependence on component properties as constraints. Constraints express facts about relations among credentials. These statements take the form of predicate statements about things that are, or must be made to be, true. When constraints are applied to the credentials of technologies or products, they are either universally or existentially quantified. That is, the constraint asserts that all components possess certain properties, or that some component possesses these properties, respectively.

A constraint can express something known or something necessary to discover. Again with similar logic to credentials, expressing a constraint as a postulate suggests that we need to obtain knowledge. As with credentials, therefore, constraints have an associated knowledge attribute that describes how the truth validity of the constraint has been, or needs to be, established.

Ensembles support a representation for blackboards. This is not too different from the well-known UML definition of collaboration. In place of UML's "society of roles and other elements" we use technologies, products, and components. UML collaboration is said to define an interaction, whereas an ensemble defines a set of interactions. This is a subtle distinction best explained by the ensemble meta-model, depicted in the figure above.

### Definition: Ensemble

An ensemble is a set of interactions among technologies, products, and components that cooperate through these interactions to provide some useful and predicted aggregate behavior.

Consistent with the definition, the meta-model defines an ensemble as a composition of one or more interactions, where each interaction is an N-ary association between anything that can possess properties, that is, technologies, products, and components. Observe also that ensemble is a subclass of Thing With Property. Therefore, an ensemble may also have properties and may interact with other ensembles. Also, we have added Custom Component to the meta-model. This models software that implements the application-specific ligaments and extensions - appreciated but also any kind of malware.

The ensemble meta-model also reflects the distinctions between things we know (credentials and constraints) from things we need to know (conjectures). The meta-model allows ensembles to interact with technologies, products, and components.

We use the term "representation" rather than "specification." We do so because blackboards contain a mix of credentials, conjectures and constraints. This touches on an ever recurring theme: The more a system depends on commercial disparate components, especially components in innovative technology areas, the more the analysis resembles a journey of exploration rather than a problem solving activity. In such an exploration, ensemble representations demarcate the relevant. An ensemble is partly conjectural, and contains a mix of established facts, inaccuracies, misconceptions, or even myths.

### Definition: Blackboard

A blackboard is an instantiation of the ensemble meta-model for a subset of interactions within the scope of an ensemble.

Blackboards are constructed to expose areas where integrity is observed. Such an area might be a service. A by-product it becomes a representation of useful knowledge about the ensemble, in the form of component credentials and interaction constraints.

Blackboards are instantiations of the ensemble meta-model, and could be represented as UML collaboration diagrams. Constraints and credentials lightweight expressed as UML annotations rather than class instantiations. It is often convenient to refer to UML classifiers (other than credentials) in the specification of interaction constraints. Annotations (labels) allow us to do this. Constraints and credentials are introduced by the keywords Constraint and Credential, respectively. To distinguish the Conjectures we attach the "?" character as a suffix to the keyword. The analogous convention applies to Constraints.

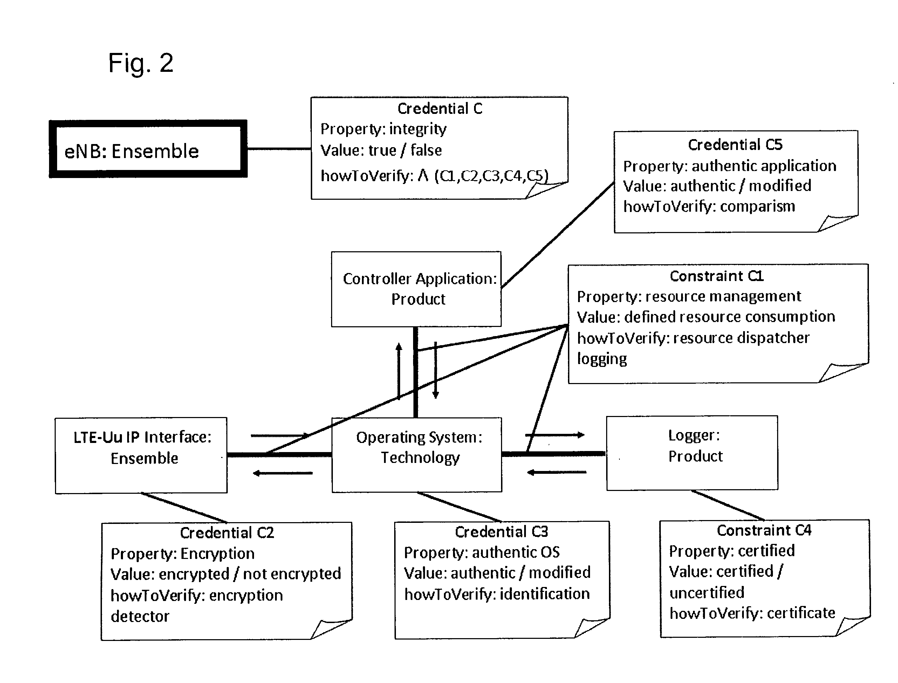

For example, an eNB comprises the following interacting components: operating system, application, logging component and the external interfaces. The external interfaces, excluding the proprietary ones, represent bindings to other ensembles. Usually these interfaces are standardized, meaning that underlay limited evolution. Hence they form good boundaries for an ensemble. A corresponding blackboard for an eNB could look like the example of Fig. 2 (a practical example would be for instance the Open eNodeB project).

Now we are ready to define guards for service integrity.

### Definition: Service integrity guards

Service Integrity Guards are evaluations of the truth of constraints and credentials that are invoked.

The second integrity, information integrity, is trickier, because it means that information should be resistant and resilient against unauthorized modifications. The solution here is to define blackboards for information exchange and aggregate the constraints per information item. Typically these blackboards comprise authentication and authorization interactions and respective components.

### Definition: Information integrity guards

Information integrity guards are evaluations of the truth of constraints and credentials inside blackboards describing the information exchange.

In principle information integrity guards are similar predicates as service integrity guards. If information is processed by a service the service integrity guards apply to this information, too.

Note, to enable the unifying approach of integrity for services inside an ever-changing information system context, it is crucial to assess integrity as defined uniformly for a whole information system rather that for system elements. In order to fulfill the main requirement of maximizing the utilities for all agents by an economic security model this integrity facet has to be treated formally by a predicate assessing the level of integrity as described in the economic security model.

Therefore, the two kinds of information guards are required together with a systematic spawn of interaction enabled by the declaration of corresponding ensembles and blackboards. It is further noted that the blackboard itself should preferably be derived from detectors in a further release. Hence there are two kinds of detectors, ones that derive blackboards from the system and others that evaluate constraints. This is due to the fact that the evolution process of the information system implies the necessity of exploration, and hence learning. The documents of the exploration must be "lightweight" to remain understandable and manageable, but sufficiently descriptive to evaluate guarding predicates formally. It does not make sense to invest too much in documenting something that is poorly understood and likely to change.

Since the component market, i.e. the social and economic organization of any extensions is highly dynamic, not standardized, new components and features leading to absolutely new and unexpected patterns of interaction. Hence documentation must be modular and disposable so they can be as easily maintained as the information system evolves they document.

This process is not a linear task, which is the origin of the identified gap of unified integrity. Instead, modifications lead to repairs and contingency plans and parallel documentation threads. The documentation must reflect these relationships among these threads.

While the blackboard is a central artifact, no single blackboard completely describes an ensemble or a service. Recall that an ensemble defines a pattern of interactions among components. These interactions may be grouped into subsets. It is useful to create blackboards for coherent and separable pattern of interaction. The criteria for coherent and separable ensembles are not always clear.

A consequence of this approach is that it generates a (potentially large) number of blackboards. Hence we need a management structure to help understanding how blackboards relate to one another, know which blackboard contains the information that is needed, and ensure that information contained in different blackboards is consistent. Such a management structure must make explicit the relationships between services and ensembles, between ensembles and blackboards, and between blackboards.

A blackboard models a subset of component interactions that lie within the scope of an ensemble and hence a service implementation. However, if a blackboard describes only a subset of component interactions, might it not include only a subset of components? Where does the complete specification of the ensemble exist (if it exists) that describes all of the components and their interactions?

The answer lies in the relationships among blackboards. Since each blackboard describes a subset of the components and interactions within the scope of an ensemble. A specification of that ensemble can be found in the aggregation (not to be read as composition) of its blackboards. This seems to be simple and acceptable for all practical purposes.

It means that we must abandon the idea of an objectively complete specification, since we could always choose to include or exclude any particular blackboard, or add further detail to existing blackboards, depending on how much we need to learn about the behavior of components. But even if we compromise the ideal of completeness, we need not compromise on consistency or utility.

Ensembles as introduced can be understood as UML packages, and blackboards as collaboration diagrams within these packages. Beyond this, a variety of relationships arise among ensembles and blackboards. These must be managed if the process is to remain under control. The following table summarizes the concepts, relations, and predicates that are the constituents of the component-based design space. This will become finally a configurable and extendible information system catalog. To increase familiarity and understanding of the management relations we compare the concepts with the well-known UML representations.

| **Concept** | **UML Representation** |
|---|---|
| Ensemble and ensemble refinements | UML package and sub-packages, respectively |
| Alternative ensemble and ensemble refinements | Blackboard of a meta-ensemble whose name is Alternative. |
| Ensemble aggregation | An ensemble view whose name is Manifest Contains all technologies, products, components, and their credentials, found in any view of the ensemble. |
| Binding | Associations between technologies and products, and between products and components, represent product and component bindings, respectively. |

### Integrity Requirements

The resulting requirements from the perspective of the dashboard simply reduce to
- The integrity detectors should support the creation and management of ensembles for services. I.e. these detectors need to disclose the ensembles for a service invocation.
- The integrity detectors should report the current evaluation (truth value) of a constraint for a concrete service invocation.

It is noted that all the mentioned requirements are subsumed and unified by the security collaboration concept applied in the context of the dashboard work package.

### Summary

One of the main challenges in integrity supervision is keeping track of many low-level details without losing consistency and overview. Contingencies arise natural as unresolved constraints, i.e. conjectures. The UML notation makes the dependencies for supervising integrity explicit and manageable. Modularity is inherent in the use of blackboards, so is the evaluation of constraints and credentials. New views can be added and old can be removed when the information system or parts evolve.

### Implementation

The following predicates in ProLog notation infer and instantiate the described dynamically evolving interaction model for an information system providing services like a telecommunication system. The program shows excerpts of a real implementation of a recursive evaluation of credentials and constraints inside a meta-model-conform (dynamic, extendable) description. It further shows how the evaluation contributes to the assessment of integrity and the value of integrity in a business context.

The first predicate specifies and retrieves involved parties using unification.
*agent(Agent).*

This predicate specifies assets, i.e. services, It allows coordination by unifying which service belongs to which agent.
*asset(Service, Agent).*

This predicate specifies which agent has the capability to provide which service.
*provider(Agent, Service):-*
*asset(Service, Agent).*

This predicate retrieves and unifies which agent has the capability to consume which service e.g. by an external retrieve from identity management.
*consumer(Agent, Service).*

This predicate infers the agent's capability to interact.
*interaction(Agent, Interaction).*

Potential interactions are provide service, consume service, introduce countermeasure, deny service, change service, re-invoke service, re-allocate service, ...

This predicate infers and unifies a strategies structure
*strategy([(Interaction, Value)*/*_]:-* ...

It might resolve a Nash equilibrium in the current game trail that maximizes payoff using an incentive compatible mechanism, that is an optimal (rational) Interaction recommendation for involved agents.

This predicate infers the generated value in the incentive compatible mechanism for all participating agents that have selected Interaction
*payoff([(Interaction, Value)*/*_]):-...*

This following predicates infers a service and component decomposition of an invoked service.
*realization(Service, Decomposition):- external retrieve from detectors.*

This external predicate unifies the invoked list of things from a serviceInvocation, i.e. a list of involved resources of the information system, where a resource is assumed to be declared as a involved component, e.g. mined from logging entries.
*%resource(TL):- listOfThings(TL).*

The next external predicate infers the required resources for a service invocation
*serviceInvocation(ServiceInvocation, Resource):-*
*external retrieve from detectors.*

This predicate specifies the contracted and applied business model between two agents, the provider and the consumer.
*transfer(ProviderAgent, ConsumerAgent, Prize):-*
*external retrieve from customer management.*

The following predicate is the essential evaluation of integrity. This predicate infers the current, observed integrity (behavior) of the information system from the detected information.
*observedBehavior(ServiceInvocation, behavior(InvalidInteractions, InvalidThings))* :-
*servicelnvocation(Servicelnvocation, Resource),*
*realization(Resource, Decomposition),*
*evaluateIntegrity((InvalidInteractions, InvalidThings, Decomposition).*

Therefore it is necessary to identify the decomposition of the involved parts of the information system. The shown predicate system infers from a service invocation, i.e. the involved resources of the information system this decomposition.
*realization(resource(TL), thingWithProperty(Decomposition)):-*
*thing WithProperty(Decomposition),*
*match(TL, E).*
*match([],_).*
*match([Thing*/*ThingList], Decomposition):-*
*inside(Thing, Decomposition),*
*match(ThingList, Decomposition).*
*inside(Thing, thing With Property(Thing)).*
*inside(Thing, thingWithProperty(ensemble(Interactions, Things)):-*
*inside(Thing, Things).*
*inside(Thing, thingWithProperty (technology(Technology, Credentials)):-*
*inside(Thing, Technology).*
*inside(Thing, thingWithProperty (product(Product, Credentials)):-*
*inside(Thing, Product).*
*inside(Thing, thing With Property (component(Component, Credentials)):-*
*inside(Thing, Component).*
*inside(Thing, thingWithProperty (customComponent (CustomC,*
*Credentials)):-*
*inside(Thing, CustomC).*

The predicate system uses the recursive decomposition structure from the meta model. The derived recursive structure is (homomorphically) evaluated using the incorporated credential predicates and the constraints predicates.

The following predicates infers recursively the invalid interactions and the invalid things out of the ensemble decomposition where several structures occur complexly interleaved, although describable. The main predicate
*evaluatelntegrity(Invalidlnteractions, InvalidThings, ThingWithProperty)*

should infer the invalid interactions and the invalid things. Carefully reading will enlighten the structural induction.
*evaluateIntegrity(InvalidInteractions, InvalidThings,*
*thingWithProperty(ensemble(Interactions, Things)):-*
*evaluatelntegritylnteractions(Invalidlnteractionsl, InvalidThingsl,*
*Interactions),*
*evaluatelntegrityThings(InvalidlnteractionsT, InvalidThingsT, Things),*
*combine(Invalidlnteractions, Invalidlnteractionsl, InvalidInteractionsT),*
*combine(InvalidThings, InvalidThingsl, InvalidThingsT).*
*evaluatelntegrity(Invalidlnteractions, InvalidThings, thingWithProperty(Thing):-*
*evaluatelntegrityThings(Invalidlnteractions, InvalidThings, Thing).*

Interactions are evaluated by
*evaluateIntegrityInteractions_,*_,*[]*).
*evaluateIntegrityInteractions(InvalidInteractions, InvalidThings, [Interaction*/*Interactions]):-*
*evaluatelntegritylnteraction(Invalidlnteractionsl, InvalidThingsl, Interaction),*
*evaluatelntegritylnteractions(InvalidlnteractionsR, InvalidThingsR,*
*Interactions),*
*combine(Invalidlnteractions, Invalidlnteractionsl, InvalidInteractionsR),*
*combine(InvalidThings, InvalidThings*/*, InvalidThingsR*).
*evaluateIntegrityInteraction([], [], interaction(Things, Constraints)):-*
*evaluateC([], Constraints).*
*eva*/*uate*/*IntegrityInteraction([Interaction], [], Interaction)).*

Things are evaluated by
*evaluateIntegrityThings(_,* _, *[]).*
*evaluateIntegrityThings (Invalidlnteractions, InvalidThings, [Thing*/*Things]):-*
*evaluatelntegrityThing (InvalidlnteractionsT, InvalidThingsT, Thing),*
*evaluatelntegrityThings(InvalidlnteractionsR, InvalidThingsR, Things),*
*combine(Invalidlnteractions, InvalidlnteractionsT, InvalidInteractionsR),*
*combine(InvalidThings, InvalidThingsT, InvalidThingsR).*
*evaluateIntegrityThing([], [], technology(Technology, Credentials)):-*
*evaluateC* ([], Credentials).
evaluateIntegrityThing(InvalidInteractions,
[technology(Technology, Credentials)|InvalidThings], technology(Technology, Credentials)):-
evaluatelntegrity(Invalidlnteractions, InvalidThings, Technology).
evaluateIntegrityThing([], [], product(Product, Credentials)):-
evaluateC ([], Credentials).
evaluateIntegrityThing(InvalidInteractions,
[product (Product, Credentials)|InvalidThings],
product (Product, Credentials)):-
evaluatelntegrity(Invalidlnteractions, InvalidThings, Product).
evaluateIntegrityThing([], [], component(Component, Credentials)):-
evaluateC ([], Credentials).
evaluateIntegrityThing(InvalidInteractions,
[component (Component, Credentials)|InvalidThings],
component (Component, Credentials)):-
evaluatelntegrity(Invalidlnteractions, InvalidThings, Component).
evaluateIntegrityThing([], [], customComponent(CustomComponent, Credentials)):-
evaluateC ([], Credentials).
evaluateIntegrityThing(InvalidInteractions,
[customComponent (CustomComponent, Credentials)|InvavalidThings],
customComponent (CustomComponent, Credentials)):-
evaluateIntegrity(InvalidInteractions, InvalidThings, CustomComponent).

This aggregation predicate evaluates the validity of the constraints and the credentials validate is an external function that fails whenever the property C is not fulfilled. It is here assumed as a Boolean predicate although there might be a lack of confidence factor in the validation where a more complex logic will be adequate.
*evaluateC(_,[]).*
*evaluateC(Invalid,[C*/*Cs]):-*
*validate(C),*
*evaluateC(Invalid, Cs)*
*evaluateC([C*/*Invalid], [C*/*Cs]):-*
*evaluate(Invalid, Cs).*

For the reader's convenience and for the sake of completeness the following predicates patterns provide the shape for ensemble decompositions as in the example ensemble meta model ...
*thingWithProperty (ensemble(Interactions, Things))* ...
*thingWithProperty (technology(Technology, Credentials))* ...
*thingWithProperty(product(Product, Credentials))* ...
*thingWithProperty(component(Component, Credentials))* ...
*thingWithProperty(customComponent (CustomComponent, Credentials))* ...

Interactions are declared as follows; Constraints and credentials are assumed as predicates.
*% interaction(Things, Constraints):- thingsWithProperty(Things).*
*% technology(T,CL):- isASetOfCredentials(CL), isASetOfProducts(T).*
*% product(P,CL):- isASetOfComponents(P), isASetOfCredentials(P).*
*% component(C, CL):- isASetOfCredentials(CL).*
*% customComponent(C, CL):- isASetOfCredentials(CL).*

To recapitulate the entry predicate derives the essential evaluation of integrity and instantiates the invalid interactions and the invalid things.
*observedBehavior(ServiceInvocation, behavior(InvalidInteractions, InvalidThings))*

The result can now be used to infer the technical impact and the commercial impact by allocating via the asset predicate the responsible agent and the agents that could have observed the deviation.
*impact(payment([(Agent, payment)*/*_]), behavior(Invalidlnteractions, InvalidThings)*

To define the economical impact of behavior deviation it is necessary identify the impact an value of enforcing this characteristic. The economical impact is treated as a social welfare value in an economic game, e.g. an incentive compatible mechanism. The fundamental principle applies is that liability is assigned to the agent that can influence the security risk, i.e. to concentrate diffuse liability to the responsible agent. The economic game considers in this settings incentives of those responsible for the information system when these agents support social welfare.

Another impact could be the trigger of countermeasures that is inferred from the defective behavior, i.e. to invoke an alternative service and to derive countermeasures for each invalid credential and constraint evaluated.
*securityEnhancement(DefectiveService, Countermeasure)*

## Claims

1. Method for determining integrity in an evolutionary collaborative information system (like a mobile telecommunication network or the Internet), with the information system
• comprising components from multiple vendors and multiple technologies with the components being under evolution of independent asynchronous lifecycles;
• being partitioned into multiple domains under the control of multiple agents, i.e. parties that administer a domain, with the agents providing and consuming services by means of the information system thereby enabling collaborative information exchange;
the method comprising the following steps:
• defining recursively the interaction of each component ensembles that respects product and technology information for identifying credentials on components and constraints on component interactions,
• defining constraints as interactional properties explicitly that are either measured, derived from measurements, or evaluated from other constraints or credentials in the context of an component ensemble,
• defining credentials as properties of components that are either measured, derived from measurements, or evaluated from other credentials in the context of an component ensemble,
• identifying for a service invocation the applied ensemble decompositions that realize the service,
• evaluating recursively the values of constraints and the values of credentials in the ensemble decompositions,
• determining the integrity of the ensembles as a function of the values of the credentials and constraints.

2. Method according to claim 1, **characterized in that** the economical impact is determined as value of integrity caused by the identified integrity violations using economical incentives according to the domains where the integrity violations are identified within a game theoretical simulation that describes the collaboration of the agents.
